(19) Europäisches Patentamt
European Patent Office
Office européen des brevets

(11) **EP 2 131 016 A1**

(12) **EUROPEAN PATENT APPLICATION**
published in accordance with Art. 153(4) EPC

(43) Date of publication:
**09.12.2009 Bulletin 2009/50**

(51) Int Cl.:
*F01N 3/02* (2006.01)     *G01R 27/02* (2006.01)

(21) Application number: **08739254.4**

(86) International application number:
**PCT/JP2008/056136**

(22) Date of filing: **28.03.2008**

(87) International publication number:
**WO 2008/117869 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007 JP 2007083326**

(71) Applicant: **NGK Insulators, Ltd.**
**Nagoya-shi, Aichi 467-8530 (JP)**

(72) Inventors:
• **KATSUYAMA, Kyosuke**
Nagoya-shi
Aichi 467-8530 (JP)
• **KITOH, Kenshin**
Nagoya-shi
Aichi 467-8530 (JP)
• **SAKUMA, Takeshi**
Nagoya-shi
Aichi 467-8530 (JP)

(74) Representative: **Paget, Hugh Charles Edward**
**Mewburn Ellis LLP**
**33 Gutter Lane**
**London**
**EC2V 8AS (GB)**

(54) **IMPEDANCE MEASURING INSTRUMENT AND IMPEDANCE MEASURING METHOD FOR FINE PARTICLE COLLECTOR**

(57) An impedance measuring instrument which can be used for measuring the quantity of fine particles deposited on fine particle collecting means with a high precision. An impedance measuring instrument of a fine particle collector (1) comprising a fine particle collection body (2) for collecting fine particles in a fluid, a conductive can body (3) for containing the fine particle collection body (2), and a buffering body (4) disposed between the fine particle collection body (2) and the conductive can body (3), wherein two or more electrodes (7) are arranged on the fine particle collection body (2), at least one of the electrodes (7) is connected with an AC power supply (8), at least the other electrode (7) is connected with an ammeter (9), the AC power supply (8) and the ammeter (9) are interconnected and further connected with the conducive can body (3), and the conducive can body (3) is grounded.

FIG.1

**Description**

Technical Field

The present invention relates to an impedance measuring instrument and an impedance measuring method. More particularly, it relates to an impedance measuring instrument which can be used for measuring the quantity of fine particles deposited in a fine particle collector with a high precision, and an impedance measuring method.

Background Art

As means for collecting fine particles in a gas to purify the gas, filtering by a filter is typical means. Examples of the material/structure of the filter include a fiber layer, ceramic foam and metal foam. In particular, as the material/structure which can decrease a pressure loss, a wall flow type is well known. This type of filter has a honeycomb structure including a plurality of cells as through channels of a gas which are defined by porous partition walls, and the ends of cells in each of the end surfaces of the honeycomb structure are alternately plugged so as to have a checker board pattern.
In such a fine particle collection filter, as the fine particles are deposited, the clogging of the filter proceeds, and the performance of the filter lowers. Therefore, the filter itself needs to be changed or a regeneration treatment for removing the deposited fine particles needs to be performed before the quantity of the deposited fine particles reaches the limit of the use of the filter. To determine a time to change the filter or perform the regeneration treatment, the quantity of the deposited fine particles needs to be detected. Heretofore, a differential pressure between exhaust pressures before and after the filter due to the pressure loss of the filter has been detected by a differential pressure sensor to detect the quantity of the deposited fine particles (e.g., see Patent Document 1).
However, in the fine particle collection filter, the pressure loss of the filter often has a hysteresis with respect to the quantity of the deposited fine particles, and hence it is often impossible to uniquely detect the quantity of the deposited fine particles only from the differential pressure between the exhaust pressures before and after the filter due to the pressure loss of the filter. For example, in the wall flow type of a ceramic filter (DPF) which collects the fine particles from the exhaust gas of a diesel engine, in a case where the fine particles continue to be collected at a low temperature and then the temperature temporarily rises to a temperature at which a catalyst to coat filter pores becomes active, the fine particles deposited in the pores are oxidized and removed. Even when a small amount of fine particles in the pores are oxidized and eliminated, the pressure loss noticeably decreases. Therefore, a relation between the quantity of the deposited fine particles and the pressure loss indicates a hysteresis, thereby causing a state in which the quantity of the deposited fine particles noticeably varies even with an equal pressure loss.
Consequently, in such a fine particle collection filter, it is difficult to uniquely estimate the quantity of the deposited fine particles from the pressure loss, and to determine the time to change the filter or perform the regeneration treatment, the quantity of the fine particles deposited in the filter is estimated by using the information of the pressure loss and additionally predicting the quantity of the fine particles generated from the engine in accordance with operation time and conditions. From the estimated quantity of the deposited fine particles, the time to change the filter or perform the regeneration treatment is determined in the present situation.
Moreover, as another means for detecting the quantity of the deposited fine particles, a method is suggested in which two or more electrodes are provided on the outer peripheral portion of the fine particle collection filter using the above honeycomb structure, and an impedance between the electrodes is measured, whereby the quantity of the deposited fine particles is estimated from the measured value (see Patent Document 2).

Patent Document 1: JP-A-60-47937
Patent Document 2: International Patent Publication No. WO2005/078253

Disclosure of the Invention

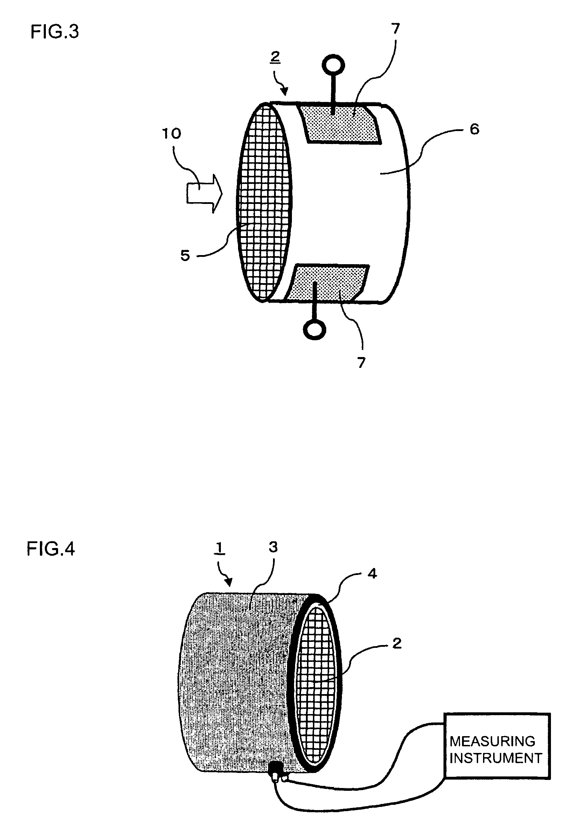

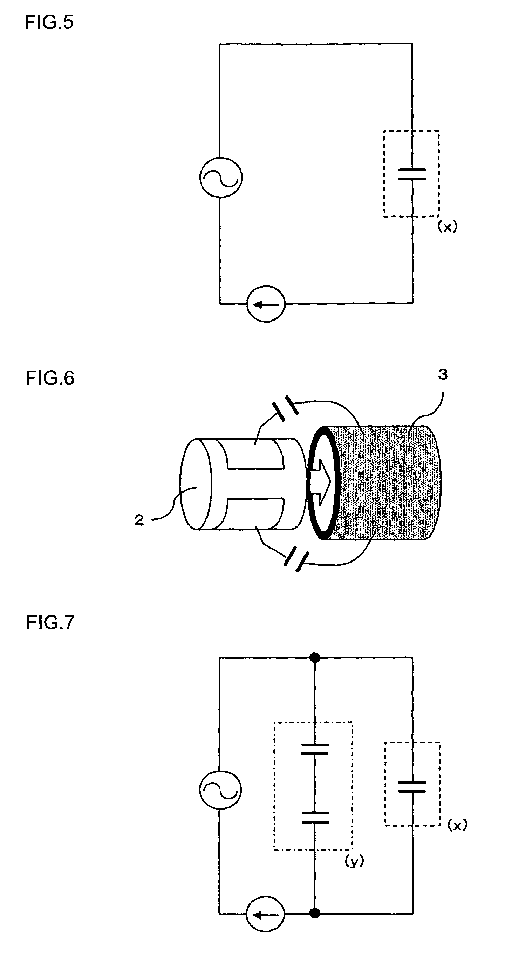

There is a room for the improvement of a detection sensitivity in the method disclosed in Patent Document 2. The method disclosed in Patent Document 2 will be described in more detail. Fig. 4 is a schematic diagram showing an impedance measuring instrument according to Patent Document 2. Moreover, Fig. 3 is a schematic perspective view of a fine particle collection body 2 which can be used for the impedance measuring instrument according to Patent Document 2. As shown in Fig. 4, in the impedance measuring instrument of a fine particle collector 1 including the fine particle collection body 2 which collects fine particles in a fluid, a conductive can body 3 which contains the fine particle collection body 2, and a buffering body 4 disposed between the fine particle collection body 2 and the conductive can body 3, the fine particle collection body 2 is provided with two electrodes 7 (see Fig. 3). The two electrodes 7 are insulated from the can body 3, and terminals are exposed externally from the can body 3, whereby both the terminals are connected with the measuring instrument. It has been considered that this behavior is obtained as shown in an equivalent circuit of Fig. 5.

However, the can body 3 is usually conductive, and one of the electrodes 7 and the can body 3 function as capacitors between which the buffering body 4 is sandwiched. Furthermore, the present inventors have found that the can body 3 and the other electrode 7 also function as capacitors between which the buffering body 4 is sandwiched. Fig. 6 is a schematic perspective view showing this behavior. Moreover, Fig. 7 is an equivalent circuit diagram of an impedance measuring instrument of Fig. 6. In Fig. 7, a portion (x) surrounded with a dotted line shows the capacitor formed by the fine particle collection body and the electrode, and a portion (y) surrounded with a one-dot chain line shows the capacitor formed by the electrodes, the buffering body and the can body.

An impedance Z of the whole circuit shown in Fig. 7 is represented by Equation (1):

$$Z = Z_x \bullet Z_y / (Z_x + Z_y) \qquad (1),$$

in which $Z_x$ is the impedance of the portion (x), and $Z_y$ is the impedance of the portion (y).
Here, when $Z_x$ changes to $Z_x + \Delta x$, Equation (1) changes to Equation (2) as follows:

$$Z = (Z_x + \Delta x) \bullet Z_y / \{ (Z_x + \Delta x) + Z_y \} \qquad (2).$$

Furthermore, the equation changes to Equation (3) as follows:

$$Z = (1 + \Delta x / Z_x) \bullet Z_y / (1 + \Delta x / Z_x + Z_y / Z_x) \qquad (3).$$

Here, when $Z_y / Z_x$ is sufficiently small, the following equation results.

$$Z \approx (1 + \Delta x / Z_x) \bullet Z_y / (1 + \Delta x / Z_x) = Z_y \qquad (4).$$

In consequence, it is difficult to find the change of $\Delta x$.

The present inventor have found that one of causes for a problem of a low detection sensitivity in the technology disclosed in Patent Document 2 is that the electrodes, the buffering body and the can body function as the capacitors as described above. Therefore, an object of the present invention is to remove, from the above-mentioned impedance measuring instrument, the influences of the capacitors formed by the electrodes, the buffering body and the can body.

To achieve the above object, according to the present invention, an impedance measuring instrument and an impedance measuring method are provided as follows.

[1] An impedance measuring instrument of a fine particle collector comprising a fine particle collection body which collects fine particles in a fluid, a conductive can body which contains the fine particle collection body, and a buffering body disposed between the fine particle collection body and the conductive can body, wherein two or more electrodes are arranged on the fine particle collection body, at least one of the electrodes is connected with an AC power supply, at least the other electrode is connected with an ammeter, the AC power supply and the ammeter are interconnected and further connected with the conducive can body, and the conducive can body is grounded.

[2] An impedance measuring method of a fine particle collector comprising a fine particle collection body which collects fine particles in a fluid, a conductive can body which contains the fine particle collection body, and a buffering body disposed between the fine particle collection body and the conductive can body, the method comprising the steps of: arranging two or more electrodes on the fine particle collection body; connecting at least one of the electrodes with an AC power supply; connecting at least the other electrode with an ammeter; interconnecting the AC power supply and the ammeter, and further connecting the AC power supply and the ammeter with the conducive can body; grounding the conducive can body; supplying an alternate current of a constant frequency and a constant voltage from the AC power supply; measuring the current by the ammeter; and calculating an impedance from the voltage of the AC power supply and the current measured by the ammeter.

[3] A method of measuring a quantity of deposited particles on a fine particle collector comprising a fine particle collection body which collects fine particles in a fluid, a conductive can body which contains the fine particle collection body, and a buffering body disposed between the fine particle collection body and the conductive can body, the method comprising the steps of: arranging two or more electrodes on the fine particle collection body; connecting at least one of the electrodes with an AC power supply; connecting at least the other electrode with an ammeter; interconnecting the AC power supply and the ammeter, and further connecting the AC power supply and the ammeter with the conducive can body; grounding the conducive can body; supplying an alternate current of a constant frequency and a constant voltage from the AC power supply; measuring the current by the ammeter; calculating an impedance from the voltage of the AC power supply and the current measured by the ammeter; and calculating, from the calculated impedance, the quantity of the fine particles deposited on the fine particle collection body.

When the impedance measuring instrument of the present invention is used, the impedance of the fine particle collector can more accurately be measured. Therefore, the quantity of the fine particles deposited on the fine particle collector can more accurately be measured.

Brief Description of the Drawings

Fig. 1 is a schematic diagram showing an impedance measuring instrument according to one embodiment of the present invention;
Fig. 2 shows an equivalent circuit of the impedance measuring instrument of Fig. 1;
Fig. 3 is a schematic perspective view showing one embodiment of a fine particle collection body which can be used for the impedance measuring instrument of the present invention;
Fig. 4 is a schematic perspective view showing an impedance measuring instrument of a conventional technology;
Fig. 5 shows an ideal equivalent circuit of the impedance measuring instrument of Fig. 4;
Fig. 6 is another schematic perspective view of the impedance measuring instrument of the conventional technology;
Fig. 7 shows an equivalent circuit of the impedance measuring instrument of Fig. 6; and
Fig. 8 is a schematic circuit diagram of an impedance measuring instrument of an example. Description of Reference Numerals

1: fine particle collector, 2: fine particle collection body, 3: can body, 4: buffering body, 5: end surface, 6: side surface, 7: electrode, 8: AC power supply, 9: ammeter, and 10: gas flow.

Best Mode for Carrying out the Invention

Hereinafter, the best mode for carrying out the present invention will be described, but it should be understood that the present invention is not limited to the following embodiment and that alteration, modification or the like appropriately added to the following embodiment based on the usual knowledge of a person with ordinary skill without departing from the scope of the present invention is included in the present invention.

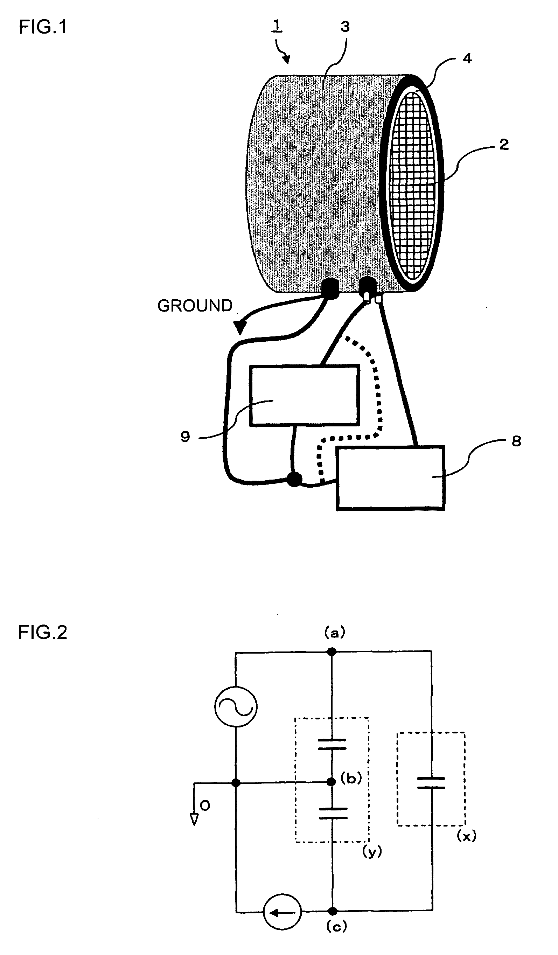

Fig. 1 is a schematic diagram showing an impedance measuring instrument according to one embodiment of the present invention. Moreover, Fig. 3 is a schematic perspective view of a fine particle collection body 2 which can be used for the impedance measuring instrument according to the embodiment of the present invention. As shown in Fig. 1, in the impedance measuring instrument of a fine particle collector 1 including the fine particle collection body 2 which collects fine particles in a fluid, a conductive can body 3 which contains the fine particle collection body 2, and a buffering body 4 disposed between the fine particle collection body 2 and the conductive can body 3, the fine particle collection body 2 is provided with two electrodes 7 (see Fig. 3). One of the electrodes 7 is insulated from the can body 3, and a terminal of the electrode is exposed externally from the can body 3, and connected with an AC power supply 8. Moreover, the other electrode 7 is similarly insulated from the can body 3, and a terminal of the electrode is exposed externally from the can body 3, and connected with an ammeter 9. The AC power supply 8 and the ammeter 9 are interconnected, and further connected with the can body 3, and the can body 3 is further grounded. This behavior is shown in the equivalent circuit of Fig. 2.

In the equivalent circuit of Fig. 2, a portion (x) surrounded with a dotted line shows a behavior that a capacitor between the pair of electrodes functions, and a portion (y) surrounded with a one-dot chain line shows a behavior that the electrodes 7 and the can body 3 function as capacitors between which the buffering body 4 is sandwiched.

In Fig. 2, the only ammeter is interposed between points (b) and (c), and a voltage between these points may be considered to be ideally 0 V. Therefore, a current flowing through the ammeter is a current which flows through the fine particle collection body. Therefore, according to the connection shown in Figs. 1 and 2, the only impedance of the portion (x) in Fig. 2 can be determined from the frequency and voltage of an alternate current supplied to the whole circuit and the current measured by the ammeter.

$$\texttt{Impedance (Z) = voltage (V)/current (I)}$$

[Fine Particle Collection Body]

In the present invention, the fine particle collection body is a main body which can collect a part or all of the fine particles in the fluid. Examples of the fine particle collection body usable in the present invention include a honeycomb structure and ceramic foam.

In the present invention, the honeycomb structure is a structure having a large number of through channels (cells) defined by partition walls and extending in an axial direction.

In the present invention, a fine particle collection filter (DPF) is a filter having the honeycomb structure including a plurality of cells as the through channels of a gas which are defined by porous partition walls, and the ends of the cells in each of the end surfaces of the honeycomb structure are alternately plugged so as to form a checker board pattern.

In the present invention, it is possible to use a honeycomb structure which is substantially not plugged. Here, the honeycomb structure which is substantially not plugged is not limited to a honeycomb structure which is not plugged at all, and may be a honeycomb structure which is plugged as much as about 10%. Such a honeycomb structure may be used in the impedance measuring instrument for exclusive use. On the other hand, when one end and the other end of each of the cells are alternately plugged so as to form the checker board pattern, the structure can be used as the DPF having an impedance measuring function.

In the present invention, there is not any special restriction on a base material of the fine particle collection body (excluding the electrodes), but preferable examples of the material include a ceramic material such as silicon carbide, cordierite, alumina titanate, sialon, mullite, silicon nitride, zirconium phosphate, zirconia, titania, alumina or silica, a combination of them, and a material including a sintered metal as a main component.

A catalyst may or may not be loaded in the base material of the fine particle collection body used in the present invention. In the present invention, the catalyst may be any one of a ternary catalyst, an oxidizing catalyst, an $NO_x$ selective reduction type catalyst (SCR) and an $NO_x$ adsorbing reduction type catalyst (LNT).

[Can Body]

Examples of the can body usable in the present invention can include a stainless steel can body, because the body has excellent strength and thermal resistance and is lightweight. Such a can body usually has a conductivity.

[Buffering Body]

Examples of the buffering body usable in the present invention include a fiber including a ceramic material of alumina, silica or the like as a main component, the fiber being used in the form of a mat.

[Electrode]

In the fine particle collection body used in the present invention, there is not any special restriction on the material of the electrode, but a preferable material is a sintered body of a conductive paste, a conductive ceramic material or metals. In the present invention, the electrode may be disposed either outside or inside the fine particle collection body.

In the present invention, there is not any special restriction on a forming process of the electrode. However, when using a process of coating a predetermined position in the outer peripheral surface or the like of the fine particle collection body with a conductive paste such as a silver paste and heating and baking the paste, the electrode is easily formed, and is firmly joined to the fine particle collection body, preferably.

Moreover, when the fine particle collection body is formed by joining a plurality of segments including the plurality of cells via a joining material, the electrode is attached to an arbitrary position in the side surface of an arbitrary segment, and the segment is further joined to another segment via the joining material, whereby it is possible to manufacture the fine particle collection body in which the electrodes are simply disposed.

It is to be noted that the materials of the fine particle collection body and the electrode are preferably selected, respectively, so that a difference between the thermal expansion coefficients of both of them is $20 \times 10^{-6}$/°C or less. For example, when the impedance measuring instrument of the present invention is used right under an engine, the instrument is exposed to an environment at a high temperature during use. Therefore, when the difference between the thermal expansion coefficients of the fine particle collection body and the electrode is excessively large, the fine particle collection body might break down or the electrode might peel owing to the difference between both the thermal expansion coefficients. However, when the difference between both the thermal expansion coefficients is $20 \times 10^{-6}$/C or less, the possibility of the occurrence of such a defect lowers.

The electrode may be a flat plate-like electrode or an electrode formed in a cylindrical shape. In case of the flat plate-like electrode, a ceramic material may be preferably formed into the electrode by a process such as tape forming, extrusion, pressing, injection or casting.

Moreover, in the present invention, at least one electrode may be embedded in the ceramic material. Thus, when the electrode is covered with the ceramic material, the electrode does not directly come in contact with an exhaust gas, which can effectively prevent the corrosion or deterioration of the electrode. Furthermore, in the present invention, all the electrodes may be embedded in the ceramic material.

In this case, examples of the main component of the ceramic material include silicon nitride, aluminum nitride, dense cordierite, and a composite material of oxide, nitride, carbide or boride. Specifically, the main component of the ceramic material is preferably at least one compound selected from the group consisting of silicon nitride, aluminum nitride, dense cordierite, an aluminum oxide based composite material, a silicon carbide based composite material and a mullite based composite material. In particular, the silicon carbide based composite material to which boron nitride (BN) particles capable of increasing the electric resistance of silicon carbide having a high thermal conductivity are added is suitable for the electrode material which functions as a dielectric material. Moreover, the mullite based composite material is suitable as the main component, in which for a purpose of increasing the thermal conductivity of mullite having a small thermal expansion coefficient but a low thermal conductivity, silicon carbide particles are dispersed. A difference between the thermal expansion coefficients of both the materials is small, and hence a residual stress generated in the materials is small. It is difficult to sinter both the materials, but a metal material has a simple flat plate-like shape, and hence pressurization firing can easily be applied. It is to be noted that in the present embodiment, the main component occupies 60 mass% or more of the components.

In the embodiment of the present invention in which the electrodes are embedded in the ceramic material, a tape-like formed ceramic material (a green tape) is used as the ceramic material, and the tape-like formed ceramic material may be coated with the above electrode. Preferable examples of a specific coating process include screen printing, calender roll, spray, electrostatic coating, dip, knife coater, chemical evaporation and physical evaporation. According to such a process, the coated surface of the material has an excellent smoothness, and it is possible to easily form a thin ceramic material in which the electrodes are embedded.

In a case where the tape-like formed ceramic material is coated with the electrode, the powder of the metal as the example of the main component of the electrode, an organic binder and a solvent such as terpineol are mixed to prepare a conductive paste, and the tape-like formed ceramic material can be coated with the paste by the above process. Moreover, to improve close attaching properties with respect to the tape-like formed ceramic material and a sinterability, an additive may be added to the above conductive paste if necessary.

Moreover, there is not any special restriction on the thickness of the tape-like formed ceramic material in a case where the ceramic material is formed into the tape-like formed ceramic material, but the thickness may be set to a range of 0.1 to 3 mm. When the thickness of the tape-like formed ceramic material is less than 0.1 mm, electric insulation properties between the electrodes cannot be secured sometimes. Moreover, when the thickness of the tape-like formed ceramic material exceeds 3 mm, space saving might be disturbed.

Afterward, the unfired ceramic material coated with the electrode and another unfired ceramic material are stacked so as to cover the electrode. Finally, the unfired and stacked ceramic materials are fired while the electrode is sandwiched between the materials, whereby the electrode embedded in the ceramic material is formed.

The fine particle collection body and the ceramic material are preferably made of the same main component. In this case, the close attaching properties between the ceramic material with the electrode embedded therein and the fine particle collection body become satisfactory. Moreover, the impedance measuring instrument of the present invention might be exposed at a high temperature during use, but there is theoretically not any difference between the thermal expansion coefficients of both the materials, and hence breakdown due to heat, the peeling of the electrode and the like can be alleviated.

Both the fine particle collection body and the ceramic material may be made of cordierite as the main component.

[AC Power Supply]

There is not any special restriction on the AC power supply used in the present invention. An AC power supply broadly used in the industry may be used. There is not any special restriction on a voltage value, but it is necessary to apply a voltage which is not more than such a voltage level that any dielectric breakdown is not caused, or a voltage in a range in which the current can be measured. The power supply is preferably used at 36 Vp-p or less at which an IC of an operating amplifier or the like can be used, and a voltage of 1 Vp-p or more is preferably applied so that the measurement current does not become excessively small.

[Ammeter]

There is not any special restriction on the ammeter used in the present invention. An ammeter broadly used in the industry may be used.

[Measurement of Quantity of Fine Particles]

In the present invention, when the electrodes disposed in the fine particle collection body are used, the quantity of the collected fine particles can be determined. Specifically, an AC impedance between the electrodes can be measured to determine the quantity of the collected fine particles. That is, the AC impedance between the electrodes provided in the fine particle collection body can be measured to measure the change of capacitance between the electrodes due to the deposition of the fine particles in the fine particle collection body. The capacitance between the electrodes or the like changes in accordance with the absolute quantity of the fine particles in the fine particle collection body, and hence the quantity of the fine particles deposited in the fine particle collection body can uniquely be determined from the measured data of the AC impedance. Specifically, a graph or the like indicating a relation between the mass of the deposited fine particles and the AC impedance is prepared based on actually measured values, whereby the AC impedance is measured to determine the quantity of the deposited fine particles during the measurement.

In the present invention, the quantity of the deposited fine particles can be determined from the measured value of the AC impedance in this manner, but to determine the quantity of the deposited fine particles with a high precision, a coil (inductance) is preferably connected with an impedance measurement circuit. When the coil is connected in this manner, the AC impedance of the circuit including the filter having the capacitance and the coil immediately comes close to 0 on resonance conditions $L\omega = 1/C\omega$ (L: the inductance, C: the capacitance and $\omega$: $2\pi f$ (f: frequency)). Therefore, the change of the AC impedance with respect to the change of the quantity of the deposited fine particles becomes sharp, and the quantity of the deposited fine particles can be determined with a high precision.

The value of the inductance of the coil to be connected may be set so as to satisfy the resonance conditions with the targeted quantity of the deposited fine particles. That is, the value of the inductance is controlled by using a variable inductance or the like so that the AC impedance immediately comes close to 0 when the quantity of the deposited fine particles reaches a predetermined value. It is to be noted that in the present invention, in addition to such an inductance, the capacitance, DC resistance and the like are connected in series or in parallel in the impedance measurement circuit, whereby the resonance conditions can be regulated.

In the honeycomb structure of the present invention, the frequency of the alternate current during the measuring of the AC impedance is preferably 100 Hz to 10 MHz. When the frequency is less than 100 Hz, the impedance value of the honeycomb structure remarkably increases. Therefore, a remarkably small current needs to be handled during the measuring of the impedance. Therefore, the measurement is easily influenced by noise, and the measurement precision of the fine particles lowers. On the other hand, when the frequency exceeds 10 MHz, the influence of the inductance included in the whole measurement system including a lead wire which is used to pick up a signal from the honeycomb structure and the like cannot be ignored, and resonance with a capacity to be regulated is induced in the honeycomb structure and a wiring line. Therefore, it becomes difficult to detect the signal, and the measurement precision lowers. Moreover, at a lower frequency, a satisfactory sensitivity to a small quantity is obtained. In consequence, the frequency of the alternate current during the measuring of the AC impedance is preferably 1 kHz to 100 kHz.

Examples

Hereinafter, the present invention will specifically be described with respect to examples, but the present invention is not limited to these examples.

(Example)

The powder of each of talc, kaolin, calcinated kaolin, alumina, aluminum hydroxide and silica was blended at a predetermined ratio so as to obtain chemical composition ranges of 42 to 56 mass% of $SiO_2$, 0 to 45 mass% of $Al_2O_3$ and 12 to 16 mass% of MgO, and 5 to 15 mass% in total of a synthetic resin such as PET, PMA or a phenol resin and 15 to 25 mass% of graphite as a pore former were added to the resultant cordierite forming material. Furthermore, predetermined amounts of methyl celluloses and a surfactant were further added, and water was added to this resultant mixture and kneaded to obtain a kneaded clay. Next, this clay was vacuum-deaerated, and extruded into a honeycomb structure, followed by drying with microwaves and hot air and firing at a maximum temperature of 1400 to 1435°C. In consequence, the honeycomb structure made of a porous ceramic material (cordierite) having a wall thickness of 0.05 mm, a cell density of 900 cpsi, a diameter of 106 mm and a length of 50 mm was manufactured. Two portions of the side surface of this honeycomb structure were coated with a silver paste having a rectangular shape of 25 mm $\times$ 151

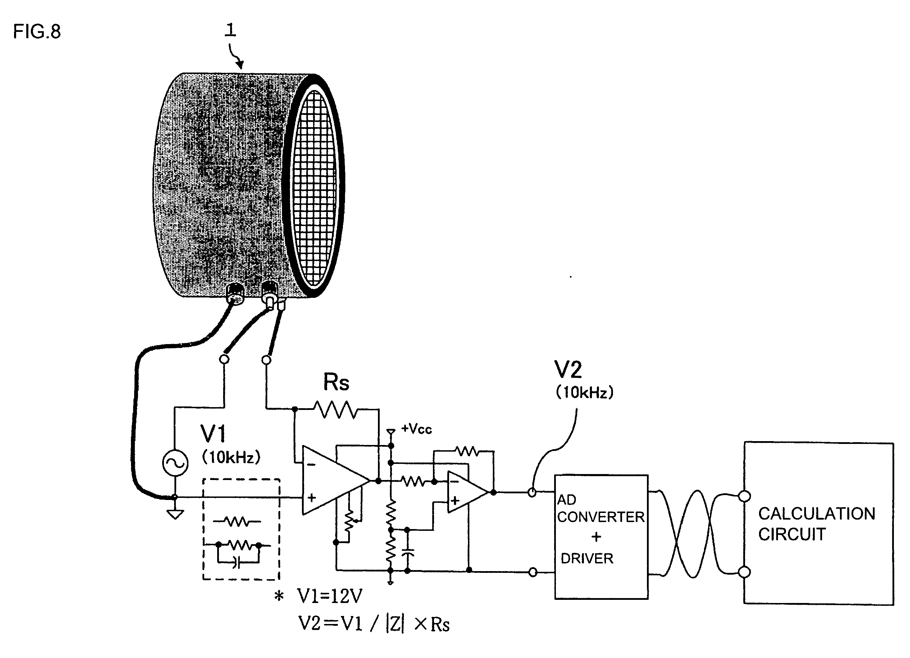

mm so that the portions were just diagonally positioned, followed by firing, to form electrodes. Next, to measure an AC impedance between the electrodes, an impedance measurement circuit was connected as shown in Fig. 8. The honeycomb structure provided with the electrodes was received as a fine particle collection body in a can body.

A diesel engine exhaust gas including fine particles (soot) was passed through this can body, and the AC impedance between the electrodes was measured while depositing the fine particles in the honeycomb structure provided with the electrodes. Engine conditions of a diesel engine having a displacement of 2 L were set to a rotation number and torque of 1500 rpm/60 Nm and an EGR valve open degree of 0%. At this time, exhaust gas conditions included 214°C, a flow rate of 1.3 Nm$^3$/min, and a fine particle concentration of 6.3 mg/m$^3$. The measurement results of impedances in an initial state and after an operation for three hours are shown in Table 1.

(Comparative Example)

Impedances in an initial state and after an operation for three hours were measured in the same manner as in the above example except that in the honeycomb structure prepared in the above example, an impedance measurement circuit was connected as shown in Fig. 4. Results are shown in Table 1.

[Table 1]

|  | Initial state (MΩ) | After soot was deposited (after 3 hours) (MΩ) | Impedance change ratio |
|---|---|---|---|
| Example | 23.0 | 20.0 | It decreased from initial state by 15% |
| Comp. Example | 4.84 | 4.70 | It decreased from initial state by 3% |

As apparent from Table 1, the impedance measuring instrument of the present invention has a satisfactory sensitivity as compared with an impedance measuring instrument of the comparative example.

Industrial Applicability

The present invention can be used for measuring the quantity of discharged fine particles from an exhaust system of an internal combustion engine or the like.

**Claims**

1. An impedance measuring instrument of a fine particle collector comprising a fine particle collection body which collects fine particles in a fluid, a conductive can body which contains the fine particle collection body, and a buffering body disposed between the fine particle collection body and the conductive can body,
   wherein two or more electrodes are arranged on the fine particle collection body,
   at least one of the electrodes is connected with an AC power supply,
   at least the other electrode is connected with an ammeter,
   the AC power supply and the ammeter are interconnected and further connected with the conducive can body, and
   the conducive can body is grounded.

2. An impedance measuring method of a fine particle collector comprising a fine particle collection body which collects fine particles in a fluid, a conductive can body which contains the fine particle collection body, and a buffering body disposed between the fine particle collection body and the conductive can body, the method comprising the steps of:

   arranging two or more electrodes on the fine particle collection body;
   connecting at least one of the electrodes with an AC power supply;
   connecting at least the other electrode with an ammeter;
   interconnecting the AC power supply and the ammeter, and further connecting the AC power supply and the ammeter with the conducive can body;
   grounding the conducive can body;
   supplying an alternate current of a constant frequency and a constant voltage from the AC power supply;
   measuring the current by the ammeter; and
   calculating an impedance from the voltage of the AC power supply and the current measured by the ammeter.

3.  A method of measuring a quantity of deposited particles on a fine particle collector comprising a fine particle collection body which collects fine particles in a fluid, a conductive can body which contains the fine particle collection body, and a buffering body disposed between the fine particle collection body and the conductive can body, the method comprising the steps of:

    arranging two or more electrodes on the fine particle collection body;
    connecting at least one of the electrodes with an AC power supply;
    connecting at least the other electrode with an ammeter;
    interconnecting the AC power supply and the ammeter, and further connecting the AC power supply and the ammeter with the conducive can body;
    grounding the conducive can body;
    supplying an alternate current of a constant frequency and a constant voltage from the AC power supply;
    measuring the current by the ammeter;
    calculating an impedance from the voltage of the AC power supply and the current measured by the ammeter; and
    calculating, from the calculated impedance, the quantity of the fine particles deposited on the fine particle collection body.

FIG.1

GROUND

FIG.2

FIG.3

FIG.4

MEASURING
INSTRUMENT

FIG.5

FIG.6

FIG.7

FIG.8

* V1=12V

$$V2 = V1 / |Z| \times Rs$$

## INTERNATIONAL SEARCH REPORT

| International application No. |
| --- |
| PCT/JP2008/056136 |

A. CLASSIFICATION OF SUBJECT MATTER
*F01N3/02*(2006.01)i, *G01R27/02*(2006.01)i

According to International Patent Classification (IPC) or to both national classification and IPC

B. FIELDS SEARCHED

Minimum documentation searched (classification system followed by classification symbols)
F01N3/02, G01R27/02

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 06-288227 A  (Mitsubishi Materials Corp.), 11 October, 1994 (11.10.94), Par. Nos. [0008] to [0010] (Family: none) | 1-3 |
| A | JP 2002-021537 A  (Nissan Diesel Motor Co., Ltd.), 23 January, 2002 (23.01.02), Par. No. [0021] (Family: none) | 1-3 |
| P,A | JP 2007-090255 A  (Toyota Motor Corp.), 12 April, 2007 (12.04.07), Par. Nos. [0010] to [0019]; Fig. 6 (Family: none) | 1-3 |

☐ Further documents are listed in the continuation of Box C.     ☐ See patent family annex.

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 14 April, 2008 (14.04.08) | 22 April, 2008 (22.04.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60047937 A
- WO 2005078253 A